(19) Europäisches Patentamt / European Patent Office / Office européen des brevets

(11) **EP 2 943 035 A1**

(12) **EUROPEAN PATENT APPLICATION**

(43) Date of publication:
**11.11.2015 Bulletin 2015/46**

(51) Int Cl.:
**H04W 76/02** *(2009.01)* **H04W 72/12** *(2009.01)*
**H04W 76/06** *(2009.01)*

(21) Application number: **15166967.8**

(22) Date of filing: **08.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.05.2014 US 201461991031 P**

(71) Applicant: **Innovative Sonic Corporation
Taipei City 11491 (TW)**

(72) Inventors:
• **Pan, Li-Te**
  **11491 Taipei City (TW)**
• **Kuo, Richard Lee-Chee**
  **11491 Taipei City (TW)**
• **Chen, Wei-Yu**
  **11491 Taipei City (TW)**

(74) Representative: **Hoefer & Partner Patentanwälte mbB
Pilgersheimer Straße 20
81543 München (DE)**

(54) **DOWNLINK CONTROL INFORMATION (DCI) RECEPTION FOR DEVICE-TO-DEVICE (D2D) RESOURCE SCHEDULING AND ACKNOWLEDGMENT**

(57) A method and apparatus for reception of a DCI for D2D resource scheduling. In one embodiment, the method includes a UE (User Equipment) receiving from a network a DCI addressed to a D2D RNTI (Radio Network Temporary Identifier) for D2D resource scheduling, wherein the D2D RNTI is allocated to the UE by the network (610). The method also includes the UE transmitting an acknowledgement to the network in response to reception of the DCI if the DCI is used to initialize a D2D resource (615).

**EP 2 943 035 A1**

```
START                                    600

605
A UE transmits a D2D BSR to a network to request D2D resources

610
The UE receives from the network a DCI addressed to a D2D RNTI for D2D
resource scheduling, wherein the D2D RNTI is allocated to the UE by the
network

615
The UE transmits an acknowledgement to the network in response to
reception of the DCI if the DCI is used to initialize a D2D resource

END
```

**FIG. 6**

## Description

## CROSS-REFERENCE TO RELATED APPLICATIONS

The present Application claims the benefit of U.S. Provisional Patent Application Serial No. 61/991,031 filed on May 9, 2014, the entire disclosure of which is incorporated herein by reference.

## FIELD

This disclosure generally relates to wireless communication networks, and more particularly, to a method and apparatus for reception of a DCI for D2D resource scheduling.

## BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

## SUMMARY

A method and apparatus for reception of a DCI for D2D resource scheduling are disclosed herein and are defined in independent claims 1 and 14, respectively. A method and apparatus for transmission of a DCI for D2D resource scheduling are disclosed herein and are defined in independent claims 7 and 15, respectively. The respective dependent claims define preferred embodiments thereof, respectively. In one embodiment, the method for reception of a DCI for D2D resource scheduling includes a UE (User Equipment) receiving from a network a DCI addressed to a D2D RNTI (Radio Network Temporary Identifier) for D2D resource scheduling, wherein the D2D RNTI is allocated to the UE by the network. This method also includes the UE transmitting an acknowledgement to the network in response to reception of the DCI if the DCI is used to initialize a D2D resource.

## BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a reproduction of Figure 2 of 3GPP R2-140626.

FIG. 6 is a flow chart according to one exemplary embodiment.

FIG. 7 is a flow chart according to one exemplary embodiment.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including SP-110638, "WID on Proposal for a study on Proximity-based Services"; TS 36.212 v11.2.0 "E-UTRA; Multiplexing and channel coding (Release 11)"; TS 36.300 v11.5.0 "E-UTRAN; Overall description; Stage 2 (Release 11); RAN1 76 Chairman's note; RAN1 76-bis Chairman's note; 3GPP RAN2 85 Chairman's note; R2-140625" Resource allocation for D2D transmitters in coverage", Ericsson, R2-140626 "Overview of D2D Scheduling" Ericsson, 3GPP TSG-RAN WG2 #85; and TS 36.321 v11.2.0 "E-UTRA; Medium Access Control (MAC) protocol specification (Release 11). The standards and documents listed above are hereby expressly incorporated by reference in their entirety.

Furthermore, U.S. Provisional Application Serial No. 61/984,987 entitled "Method and Apparatus for Device to Device Service in a Wireless Communication System" is hereby expressly incorporated by reference in its entirety.

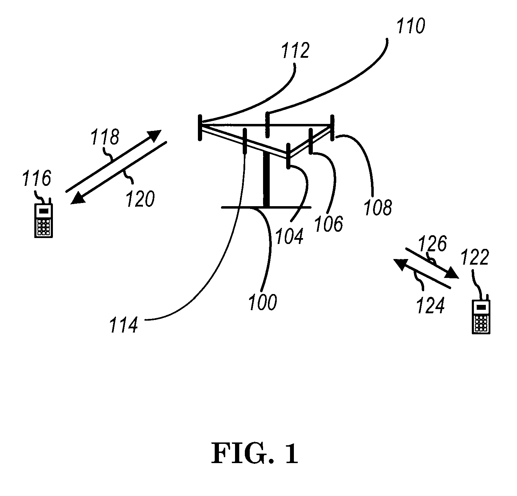

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

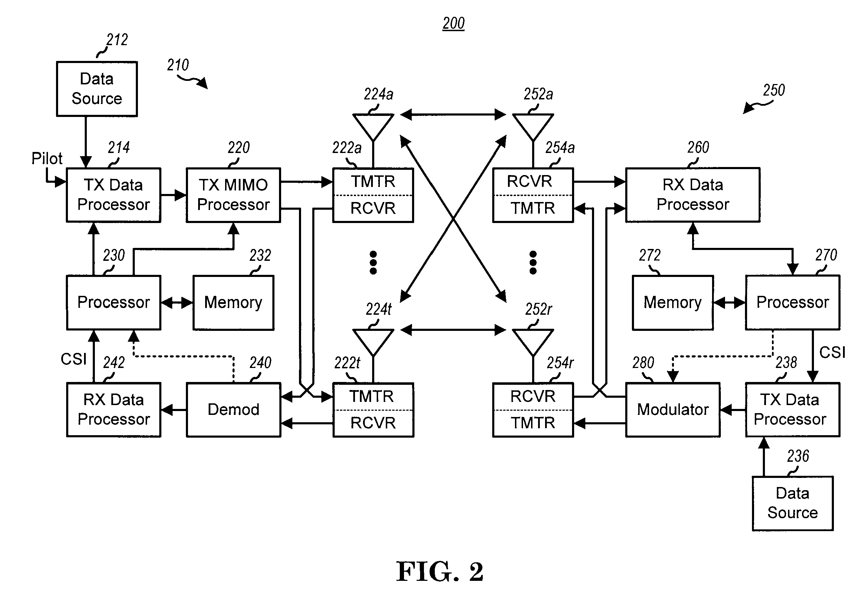

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

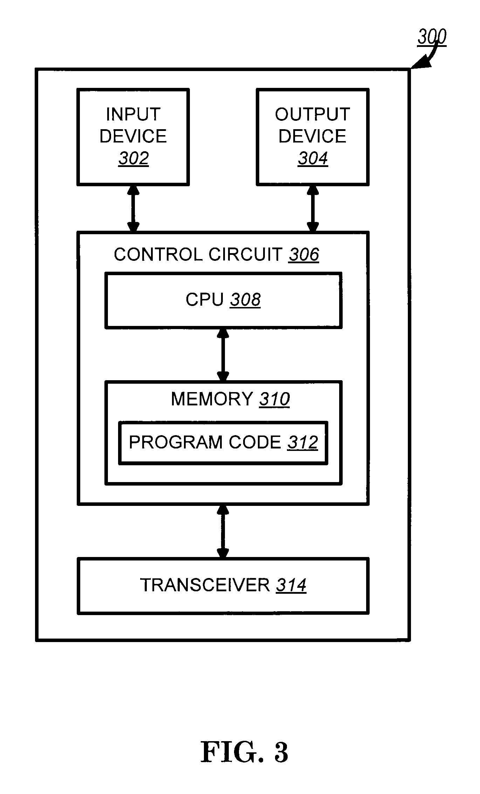

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

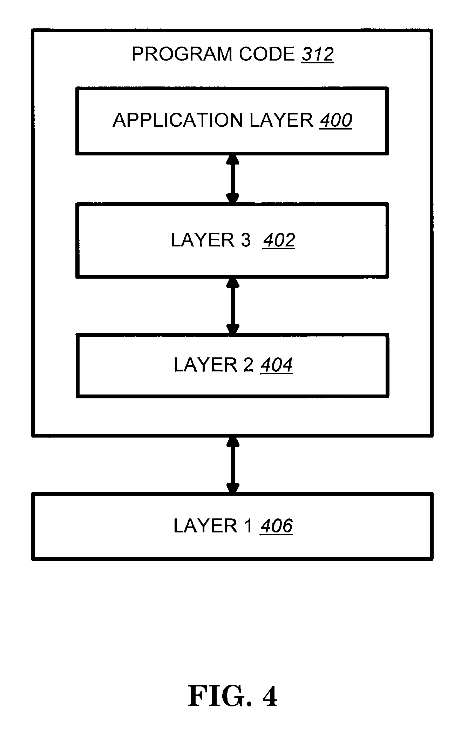

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A systems, the Layer 2 portion may include a Radio Link Control (RLC) layer and a Medium Access Control (MAC) layer. The Layer 3 portion may include a Radio Resource Control (RRC) layer.

3GPP SP-110638 proposes a new study item on Proximity-based Services (ProSe), i.e, D2D services.

As discussed in 3GPP SP-110638, the justification and objective of the study item are as follows:

### 3 Justification

Proximity-based applications and services represent a recent and enormous socio-technological trend. The principle of these applications is to discover instances of the applications running in devices that are within proximity of each other, and ultimately also exchange application-related data. In parallel, there is interest in proximity-based discovery and communications in the public safety community.

Current 3GPP specification are only partially suited for such needs, since all such traffic and signalling would have to be routed in the network, thus impacting their performance and adding un-necessary load in the network. These current limitations are also an obstacle to the creation of even more advanced proximity-based applications.

In this context, 3GPP technology, has the opportunity to become the platform of choice to enable proximity-based discovery and communication between devices, and promote a vast array of future and more advanced proximity-based applications.

### 4 Objective

The objective is to study use cases and identify potential requirements for an operator network controlled discovery and communications between devices that are in proximity, under continuous network control, and are under a 3GPP network coverage, for:

1. Commercial/social use

2. Network offloading

3. Public Safety

4. Integration of current infrastructure services, to assure the consistency of the user experience including reachability and mobility aspects

Additionally, the study item will study use cases and identify potential requirements for

5. Public Safety, in case of absence of EUTRAN coverage (subject to regional regulation and operator policy, and limited to specific public-safety designated frequency bands and terminals)

Use cases and service requirements will be studied including network operator control, authentication, authorization, accounting and regulatory aspects.

The study does not apply to GERAN or UTRAN.

3GPP TS 36.212 specifies the structure of DCI format and meaning of each field in DCI format as follows:

### 5.3.3.1 DCI formats

The fields defined in the DCI formats below are mapped to the information bits $\alpha_0$ to $\alpha_{A-1}$ as follows.

Each field is mapped in the order in which it appears in the description, including the zero-padding bit(s), if any, with the first field mapped to the lowest order information bit $\alpha_0$ and each successive field mapped to higher order information bits. The most significant bit of each field is mapped to the lowest order information bit for that field, e.g. the most significant bit of the first field is mapped to $\alpha_0$.

### 5.3.3.1.1 Format 0

DCI format 0 is used for the scheduling of PUSCH in one UL cell.

The following information is transmitted by means of the DCI format 0:

- Carrier indicator - 0 or 3 bits. This field is present according to the definitions in [3].
- Flag for format0/format1A differentiation - 1 bit, where value 0 indicates format 0 and value 1 indicates format 1A
- Frequency hopping flag - 1 bit as defined in section 8.4 of [3]. This field is used as the MSB of the corresponding resource allocation field for resource allocation type 1.
- Resource block assignment and hopping resource allocation - $\left\lceil \log_2 \left( N_{\mathrm{RB}}^{\mathrm{UL}} \left( N_{\mathrm{RB}}^{\mathrm{UL}} + 1 \right) / 2 \right) \right\rceil$ bits

    - For PUSCH hopping (resource allocation type 0 only):
    - $N_{UL\_hop}$ MSB bits are used to obtain the value of $\tilde{n}_{PRB}(i)$ as indicated in section 8.4 of [3]
        - $\left( \left\lceil \log_2 \left( N_{\mathrm{RB}}^{\mathrm{UL}} \left( N_{\mathrm{RB}}^{\mathrm{UL}} + 1 \right) / 2 \right) \right\rceil - N_{\mathrm{UL\_hop}} \right)$

        bits provide the resource allocation of the first slot in the UL subframe

    - For non-hopping PUSCH with resource allocation type 0: -
        - $\left( \left\lceil \log_2 \left( N_{\mathrm{RB}}^{\mathrm{UL}} \left( N_{\mathrm{RB}}^{\mathrm{UL}} + 1 \right) / 2 \right) \right\rceil \right)$ bits provide

        the resource allocation in the UL subframe as defined in section 8.1.1 of [3]

    - For non-hopping PUSCH with resource allocation type 1:
        - The concatenation of the frequency hopping flag field and the resource block assignment and hopping resource allocation field provides the resource allocation field in the UL subframe as defined in section 8.1.2 of [3]

- Modulation and coding scheme and redundancy version - 5 bits as defined in section 8.6 of [3]
- New data indicator - 1 bit
- TPC command for scheduled PUSCH - 2 bits as defined in section 5.1.1.1 of [3]
- Cyclic shift for DM RS and OCC index - 3 bits as defined in section 5.5.2.1.1 of [2]
- UL index - 2 bits as defined in sections 5.1.1.1, 7.2.1, 8 and 8.4 of [3] (this field is present only for TDD operation with uplink-downlink configuration 0)
- Downlink Assignment Index (DAI) - 2 bits as defined in section 7.3 of [3] (this field is present only for TDD operation with uplink-downlink configurations 1-6)
- CSI request - 1 or 2 bits as defined in section 7.2.1 of [3]. The 2-bit field applies to

    - UEs that are configured with more than one DL cell and when the corresponding DCI format is mapped onto the UE specific search space given by the C-RNTI as defined in [3],
    - UEs that are configured by higher layers with more than one CSI process and when the corresponding DCI format is mapped onto the UE specific search space given by the C-RNTI as defined in [3];

    otherwise the 1-bit field applies
- SRS request - 0 or 1 bit. This field can only be present in DCI formats scheduling PUSCH which are mapped onto the UE specific search space given by the C-RNTI as defined in [3]. The interpretation of this field is provided in section 8.2 of [3]
- Resource allocation type - 1 bit. This field is only present if $N_{\mathrm{RB}}^{\mathrm{UL}} \leq N_{\mathrm{RB}}^{\mathrm{DL}}$. The interpretation of this field is provided in section 8.1 of [3]

If the number of information bits in format 0 mapped onto a given search space is less than the payload size of format 1A for scheduling the same serving cell and mapped onto the same search space (including any padding bits appended to format 1A), zeros shall be appended to format 0 until the payload size equals that of format 1A.

[...]

It is noted that a DCI is carried by a PDCCH (Physical Downlink Control Channel)/ePDCCH (Enhanced Physical Downlink Control Channel) sent from an eNB (evolved Node B) to a UE (User Equipment).

3GPP TS 36.300 lists UE identities related to E-UTRAN (Evolved Universal Terrestrial Radio Access) as follows:

**8 E-UTRAN identities**

**8.1 E-UTRAN related UE identities**

The following E-UTRAN related UE identities are used at cell level:

- C-RNTI: unique identification used for identifying RRC Connection and scheduling;
- Semi-Persistent Scheduling C-RNTI: unique identification used for semi-persistent scheduling;
- Temporary C-RNTI: identification used for the random access procedure;
- TPC-PUSCH-RNTI: identification used for the power control of PUSCH;
- TPC-PUCCH-RNTI: identification used for the power control of PUCCH;
- Random value for contention resolution: during some transient states, the UE is temporarily identified with a random value used for contention resolution purposes.

3GPP RAN1 76 Chairman's note describes two modes of resources for D2D communications as follows:

**Agreements:**

- From a transmitting UE perspective a UE can operate in two modes for resource allocation:

  - Mode 1: eNodeB or rel-10 relay node schedules the exact resources used by a UE to transmit direct data and direct control information

    - FFS: if semi-static resource pool restricting the available resources for data and/or control is needed

  - Mode 2: a UE on its own selects resources from resource pools to transmit direct data and direct control information

    - FFS if the resource pools for data and control are the same
    - FFS: if semi-static and/or pre-configured resource pool restricting the available resources for data and/or control is needed

As discussed in 3GPP RAN1-76bis Chairman's note, the D2D transmissions are scrambled by the ID in the SA in rel-12 as described below:

**Agreements:**

- D2D data communication channel transmissions are scrambled by the ID in the SA
- Scrambling seed of the SA is fixed in the specifications

3GPP RAN2 85 Chairman's note further lists the following agreements on Mode

1 resource:
2 In Mode 1, a UE requests transmission resources from an eNB. The eNB schedules transmission resources for transmission of scheduling assignment(s) and data.
2a In Mode 1, the UE sends a scheduling request (D-SR or RA) to the eNB followed by a BSR based on which the eNB can determine that the UE intends to perform a D2D transmission as well as the required amount resources.
2b In Mode 1, it is FFS how the eNB indicates the transmission resources to the UE.

In 3GPP R2-140625, a new RNTI (Radio Network Temporary Identifier) called D2D-RNTI is introduced for D2D resource allocation. The D2D grant from the network shall be scrambled with the D2D-RNTI as described in 3GPP R2-140625 as follows:

**2.1.1.3 Resource grant**

As mentioned above, the BSR and its succeeding resource grant needs to be distinguishable between Legacy LTE and D2D. MAC PDU subheader with LCID 11000 can be used for eNB to distinguish D2D BSR from Legacy LTE BSR.

There is no explicit binding between a BSR and its succeeding resource grant. For example, a UE may send a Legacy LTE BSR requesting resources for LTE. Before receiving corresponding grant, the UE sends a D2D BSR requesting resources for D2D. When the UE receives resource grant, the UE needs to know what the grant is for, D2D or Legacy LTE, explicitly or implicitly.

One possible solution is to have different scrambling to distinguish between Legacy LTE and D2D. For Legacy LTE, the resource grant corresponding to a Legacy LTE BSR is transmitted via PDCCH scrambled with C-RNTI. For D2D, the resource grant corresponding to a D2D BSR could be scrambled with some other RNTI, here called "D2D-RNTI".

**Proposal 1 The resource grant corresponding to a D2D BSR is scrambled with a new RNTI, called D2D-RNTI.**

**2.1.1.4 Proposed request/grant procedure for D2D**

Based on the above discussion and the identified problems in observation 3, we propose the following request/grant procedure for D2D:

Step 1.1 UE sends SR (Scheduling Request) to eNB via PUCCH;
Step 1.2 eNB grants UL resource (for UE to send BSR) via PDCCH, scrambled by C-RNTI;
Step 1.3 UE sends D2D BSR indicating the buffer status via PUSCH;
Step 1.4 eNB grants D2D resource (for UE to send data) via PDCCH, scrambled by D2D-RNTI.

Upon completion of this procedure the UE will have a D2D resource to transmit the data on.

**Proposal 2 Before performing a D2D transmission in coverage, the UE shall get a grant from the network.**

To support D2D communication, 3GPP R2-140626 proposes that a transmitting UE transmits scheduling assignments (SA) to carry information for the receiving UE on how to fmd/decode the user data as follows:

**2.1 The scheduling assignment (SA)**

The scheduling assignment carries information on how to find/decode the user data. The scheduling assignments will probably be transmitted with a (set of) fixed pre-defined format (e.g., MCS) and further include, e.g.

- Broadcast transmitter identity,
- Time-frequency resources for receiving broadcast data,
- FFS: Transmission format and MCS for the broadcast data to be received, etc.
- FFS: timing advance / offset info ...

The exact content of the scheduling assignment is for RAN1 to study. The scheduling assignments are received on a pre-defined D2D communication resource pool known to the receiver. The exact method for transmitting scheduling assignments, whether to use a broadcast data channel or control channel, is FFS.

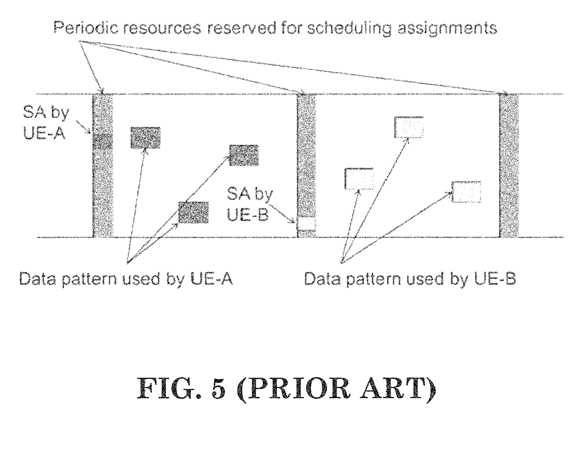

[Figure 2 of 3GPP R2-140626 has been reproduced as FIG. 5]

The SA should be transmitted periodically until the current transmission session ends. The periodicity should be predefined. A short period increases overhead; a long period has an impact on the end-to-end latency. The exact values are for further study. A suitable value may be in the range of 30-100 ms. The reasons for repeating the SA is to ensure that the SA is received and to "signal" to other potential transmitters that the channel is occupied.

In general, U.S. Provisional Patent Application Serial No. 61/984,987 provides a method for solving how the network can understand resource requirement of each D2D link in a UE. More specifically, U.S. Provisional Patent Application Serial No. 61/984,987 states:
[...]
For D2D communication, a transmitting UE may establish D2D links with more than one target UE, i.e. one link to each target UE. To support multiple D2D links without changing the current format of a BSR MAC control element, it could be assumed that each LCG is associated with one D2D link so that the eNB can be aware of individual buffer status for each D2D link. In this situation, if there is more than one logical channel configured to one D2D link, this solution would require that all the logical channels of a D2D link belong to the same LCG. For example, there are two D2D links in a UE. Link 1 is configured with LCG1 and Link 2 is configured with LCG2. In this situation, either one LCG is considered as higher priority than the other LCG or they are considered as same priority in terms of eNB scheduling. However, both links may contain logical channels with different priorities. This would deviate from the original intention of logical channel grouping. Therefore, reusing the current BSR format cannot support D2D links properly. A new way for the eNB to distinguish buffer statuses of different D2D links should be considered.

One potential solution is to keep the original usage of logical channel grouping in a BSR MAC control element and to specify a D2D BSR on per D2D link (or per target UE) basis. Specifically, a D2D BSR may include a field, which associates the D2D BSR with a corresponding D2D link if there are multiple D2D links in a UE. The information in the field could be an identity of the corresponding D2D link/target UE. By this way, the eNB has knowledge about priority information among logical channels on each D2D link. An example of a D2D BSR format for this alternative is illustrated in Figure1.
[...]
3GPP TS 36.321 provides the following description for DL-SCH data transfers:

**5.3 DL-SCH data transfer**

**5.3.1 DL Assignment reception**

Downlink assignments transmitted on the PDCCH indicate if there is a transmission on a DL-SCH for a particular UE and provide the relevant HARQ information.
When the UE has a C-RNTI, Semi-Persistent Scheduling C-RNTI, or Temporary C-RNTI, the UE shall for each TTI during which it monitors PDCCH and for each Serving Cell:

- if a downlink assignment for this TTI and this Serving Cell has been received on the PDCCH for the UE's C-RNTI, or Temporary C-RNTI:

  - if this is the first downlink assignment for this Temporary C-RNTI:

- consider the NDI to have been toggled.

- if the downlink assignment is for UE's C-RNTI and if the previous downlink assignment indicated to the HARQ entity of the same HARQ process was either a downlink assignment received for the UE's Semi-Persistent Scheduling C-RNTI or a configured downlink assignment:

  - consider the NDI to have been toggled regardless of the value of the NDI.

- indicate the presence of a downlink assignment and deliver the associated HARQ information to the HARQ entity for this TTI.

- else, if this Serving Cell is the PCell and a downlink assignment for this TTI has been received for the PCell on the PDCCH of the PCell for the UE's Semi-Persistent Scheduling C-RNTI:
- if the NDI in the received HARQ information is 1:

  - consider the NDI not to have been toggled;
  - indicate the presence of a downlink assignment and deliver the associated HARQ information to the HARQ entity for this TTI.

- else, if the NDI in the received HARQ information is 0:

  - if PDCCH contents indicate SPS release:

    - clear the configured downlink assignment (if any);
    - if the *timeAlignmentTimer* associated with the pTAG is running:

      - indicate a positive acknowledgement for the downlink SPS release to the physical layer.

  - else:

    - store the downlink assignment and the associated HARQ information as configured downlink assignment;
    - initialise (if not active) or re-initialise (if already active) the configured downlink assignment to start in this TTI and to recur according to rules in subclause 5.10.1;
    - set the HARQ Process ID to the HARQ Process ID associated with this TTI;
    - consider the NDI bit to have been toggled;
    - indicate the presence of a configured downlink assignment and deliver the stored HARQ information to the HARQ entity for this TTI.

[...]

As seen, 3GPP TS 36.321 specifies that a UE shall send a positive acknowledgement when receiving a PDCCH signal (DCI) from a network for releasing a downlink semi-persistent scheduling (SPS) resource, while no positive acknowledgement is sent if a PDCCH signal for configuring/re-configuring the downlink SPS resource.

In legacy LTE, the eNB would schedule resources for a UE by transmitting a DCI addressed to the UE's RNTI. The DCI will indicate how many resources can be used by a UE and the RNTI is used for identifying the UE. In dynamical scheduling, although a UE will not reply any ACK for UL or DL resource allocation to the eNB, the eNB could understand whether the DCI is correctly received or not by an occurrence of uplink transmission or ACK/NACK for DL data reception.

For semi-persistent resource allocation in legacy LTE, the eNB would transmit a DCI addressed to a UE's SPS C-RNTI (Cell Radio Network Temporary Identifier) for initializing, re-initializing, or releasing the semi-persistent scheduling (SPS) resource. In the UL (Uplink) SPS case, the UE does not reply with any ACK in response to reception of a DCI from the eNB for SPS because the eNB could understand whether the UL SPS is activated or not by monitoring uplink transmission from the UE.

On the other hand, the UE would send an ACK as a reply for a DCI from the eNB for releasing a DL (Downlink) SPS, while no ACK is sent by the UE if the DCI is used to initialize/re-initialize the downlink SPS resource. For DL SPS initialization/re-initialization, the eNB could understand whether the DCI is correctly received by monitoring ACK/NACK for DL data reception from the UE. However, since there is no more DL data transmission after the SPS resource is released, it would be difficult hard the eNB to differentiate whether the SPS resource is successfully released or not. If the SPS resource release fails, the UE would continue monitoring SPS DL transmission; and thus the eNB should re-transmit the SPS resource release instruction to the UE. Under the circumstances, the UE would need to reply with an ACK for the case of SPS resource release.

According to the RAN2-85 agreement discussed in the 3GPP RAN2-85 Chairman's note, the eNB is responsible to schedule D2D resource for UE in Mode 1. It should be feasible to re-use the mechanism of DCI addressed to a D2D RNTI for D2D resource scheduling similar to the legacy LTE. However, if a UE does not successfully receive resource allocation instruction from the eNB, it would be difficult to detect such failure by the eNB. For D2D resource semi-persistent scheduling case, if such failure cannot be detected, it would cause resource waste in addition to D2D traffic delay. Thus, according to the invention, a UE should reply with an ACK when receiving an instruction from the eNB for initializing, re-initializing, or releasing the D2D semi-persistent scheduling resource. This should also be applicable to the D2D dynamic scheduling case. For dynamic scheduling, the UE receives an instruction from eNB for scheduling D2D resource, and the UE sends acknowledgement to the eNB in response to reception of the instruction.

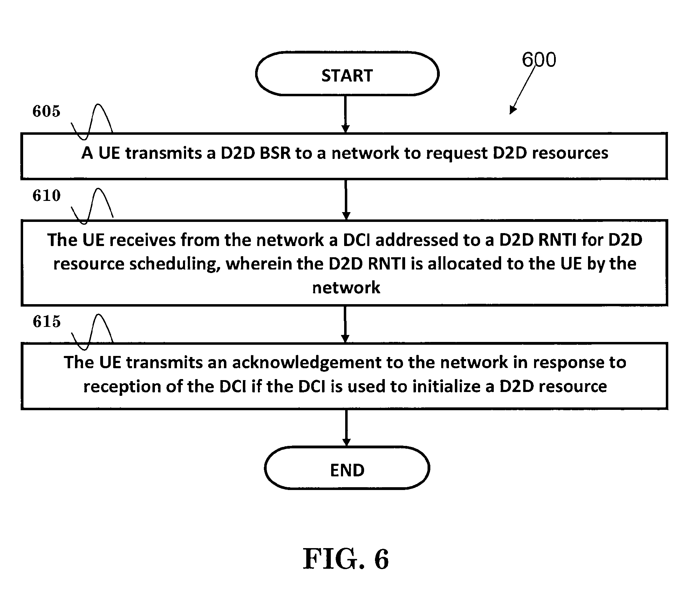

FIG. 6 is a flow chart 600 illustrating an exemplary signal flow according to a first exemplary embodiment of the invention from the perspective of a UE (User Equipment). In step 605, a UE transmits a D2D BSR (Buffer Status Report) to a network to request D2D resources. In step 610, the UE receives from the network a DCI addressed to a D2D RNTI for D2D resource scheduling, wherein the D2D RNTI is allocated to the UE by the network. Preferably, the DCI could be transmitted on a PDCCH or an ePDCCH. Preferably, the D2D RNTI could be used to identify the UE or a D2D link in the UE.

In step 615, the UE transmits an acknowledgement to the network in response to reception of the DCI if the DCI is used to initialize a D2D resource. Preferably, the D2D resource could be semi-persistently scheduled. Alternatively preferably, the D2D resource could be dynamically scheduled. Alternatively or additionally preferably, the DCI would become invalid for transmission if a timer associated with the D2D resource expires. Further alternatively or additionally preferably, the acknowledgement could be a positive acknowledgement.

Preferably, after step 615, the UE may further transmit an acknowledgement to the network in response to reception of the DCI if the DCI is used to re-initialize the D2D resource. Alternatively preferably, after step 615, the UE may further transmit an acknowledgement to the network in response to reception of the DCI if the DCI is used to release the D2D resource.

In a specific preferred embodiment of the first exemplary embodiment of the invention, the UE may further transmit an acknowledgement to the network in response to reception of the DCI if the DCI is used to re-initialize the D2D resource after step 615. In addition, the UE may transmit an acknowledgement to the network in response to reception of the DCI if the DCI is used to release the D2D resource.

Referring back to FIGS. 3 and 4, the device 300 includes a program code 312 stored in memory 310 of a UE. In one embodiment, the CPU 308 could execute program code 312 to enable the UE (i) to receive from a network a DCI addressed to a D2D RNTI for D2D resource scheduling, wherein the D2D RNTI is allocated to the UE by the network, and (ii) to transmit an acknowledgement to the network in response to reception of the DCI if the DCI is used to initialize a D2D resource.

In an alternative embodiment, the CPU 308 could also execute program code 312 to enable the UE to transmit a D2D BSR for requesting D2D resources before receiving from a network a DCI addressed to a D2D RNTI for D2D resource scheduling.

In another alternative embodiment that might also be combined with the alternative embodiment, the CPU 308 could also execute program code 312 to enable the UE (i) to transmit an acknowledgement to the network in response to reception of the DCI if the DCI is used to re-initialize the D2D resource, and/or (ii) to transmit an acknowledgement to the network in response to reception of the DCI if the DCI is used to release the D2D resource after transmitting an acknowledgement to the network in response to reception of the DCI if the DCI is used to initialize a D2D resource.

In addition, the CPU 308 could execute the program code 312 to perform all of the above-described actions and steps or others described herein, in particular those described in paragraphs [0048] to [0052] above.

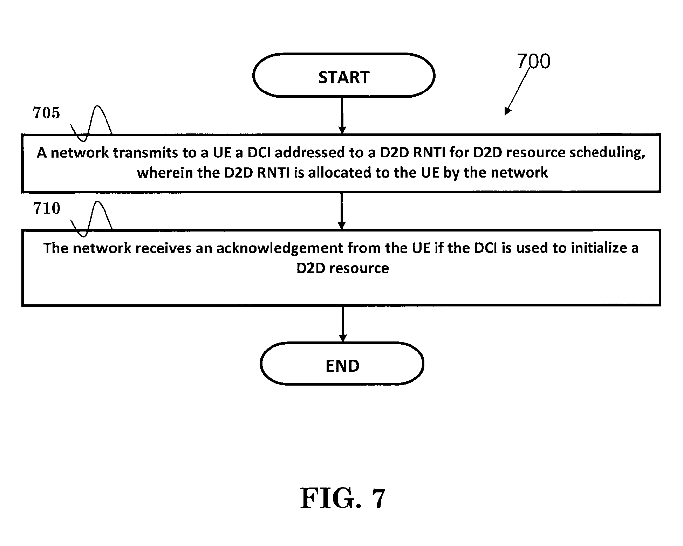

FIG. 7 is a flow chart 700 in accordance with a second exemplary embodiment of the invention from the perspective of a network device. In step 705, a network transmits to a UE a DCI addressed to a D2D RNTI for D2D resource scheduling, wherein the D2D RNTI is allocated to the UE by the network. Preferably, the DCI could be transmitted on a PDCCH or an ePDCCH. Preferably, the D2D RNTI could be used to identify the UE or a D2D link in the UE.

In step 710, the network receives an acknowledgement from the UE if the DCI is used to initialize a D2D resource. Preferably, the D2D resource could be semi-persistently scheduled. Alternatively preferably, the D2D resource could be dynamically scheduled. Alternatively or additionally preferably, the DCI would become invalid for transmission if a timer associated with the D2D resource expires. Further alternatively or additionally preferably, the acknowledgement could be a positive acknowledgement.

Preferably, after step 710, the network may further receive an acknowledgement from the UE if the DCI is used to re-initialize the D2D resource. Alternatively preferably, after step 710, the network may further receive an acknowledgement from the UE if the DCI is used to release the D2D resource. In a specific preferred embodiment of the second exemplary embodiment of the invention, the network may further receive an acknowledgement from the UE if the DCI is used to re-initialize the D2D resource after step 710. Then, the network may further receive an acknowledgement from the UE if the DCI is used to release the D2D resource.

In yet another preferred embodiment that might be combined with any of the preferred embodiments of the second exemplary embodiment of the invention, as an error occurs, the network may further re-transmit the DCI if the acknowledgement from the UE is not successfully received. The acknowledgement may not be successfully received after the UE transmits an acknowledgement in response to reception of the DCI if the DCI is used to initialize, re-initialize or release a D2D resource. In a further preferred embodiment that might be combined with any of the preferred embodiments of the second exemplary embodiment of the invention, as another error occurs, if the DCI becomes invalid for transmission before receiving the acknowledgement, the network does not re-transmit the DCI in case of missing acknowledgement.

Referring back to FIGS. 3 and 4, the device 300 includes a program code 312 stored in memory 310 of a communication device. In one embodiment, the CPU 308 could execute program code 312 to enable the network (i) to transmit to a UE a DCI addressed to a D2D RNTI for D2D resource scheduling, wherein the D2D RNTI is allocated to the UE by the network, and (ii) to receive an acknowledgement from the UE if the DCI is used to initialize a D2D resource.

In an alternative embodiment, the CPU 308 could further execute program code 312 to enable the network (i) to receive an acknowledgement from the UE if the DCI is used to re-initialize the D2D resource, and/or (ii) to receive an acknowledgement from the UE if the DCI is used to release the D2D resource, after receiving an acknowledgement from the UE if the DCI is used to initialize a D2D resource.

In yet another embodiment that might be combined with the embodiment and/or the alternative embodiment as an error occurs, the CPU 308 could further execute program code 312 to enable the network to re-transmit the DCI if the acknowledgement from the UE is not successfully received. The acknowledgement may not be successfully received after the UE transmits an acknowledgement in response to reception of the DCI if the DCI is used to initialize, re-initialize or release a D2D resource. In a further embodiment that might be combined with the embodiment and/or the alternative embodiment and/or the yet another embodiment, as another error occurs, if the DCI becomes invalid for transmission before receiving the acknowledgement, the CPU 308 could execute program code 312 to enable the network to not re-transmit the DCI in case of missing acknowledgement.

In addition, the CPU 308 can execute the program code 312 to perform all of the above-described actions and steps or others described herein, in particular those described in paragraphs [0057] to [0060] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways, in particular a system according to the invention preferably combines the first and second exemplary embodiments of the invention. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method for reception of a downlink control information, in the following also referred to as DCI, for device-to-device, in the following also referred to as D2D, resource scheduling, comprising:

   a User Equipment, in the following also referred to as UE, receives from a network a DCI addressed to a Radio Network Temporary Identifier, in the following also referred to as D2D RNTI, for D2D resource scheduling, wherein the D2D RNTI is allocated to the UE by the network (610); and
   the UE transmits an acknowledgement to the network in response to reception of the DCI if the DCI is used to initialize a D2D resource (615).

2. The method of claim 1, further comprising:

   the UE transmits an acknowledgement to the network in response to reception of the DCI if the DCI is used to re-initialize and/or to release the D2D resource.

3. The method of claim 1 or 2, further comprising:

   the UE transmits a Buffer Status Report, in the following also referred to as D2D BSR, for requesting D2D resources before receiving the DCI (605).

4. The method of anyone of claims 1 to 3, wherein the DCI is transmitted on a Physical Downlink Control Channel, in the following also referred to as PDCCH, or an Enhanced Physical Downlink Control Channel, in the following also referred to as ePDCCH; and/or wherein the D2D resource is semi-persistently or dynamically scheduled; and/or wherein the D2D RNTI is used to identify the UE or a D2D link in the UE.

5. The method of anyone of claims 1 to 4, wherein the acknowledgement is a positive acknowledgement.

6. The method of anyone of claims 1 to 5, wherein the DCI becomes invalid for transmission if a timer associated with the D2D resource expires.

7. A method for transmission of a downlink control information, in the following also referred to as DCI, for device-to-device, in the following also referred to as D2D, resource scheduling, comprising:

   a network transmits to a User Equipment, in the following also referred to as UE, a DCI addressed to a Radio Network Temporary Identifier, in the following also referred to as D2D RNTI, for D2D resource scheduling, wherein the D2D RNTI is allocated to the UE by the network (705); and
   the network receives an acknowledgement from the UE if the DCI is used to initialize a D2D resource (710).

8. The method of claim 7, further comprising:

   the network receives an acknowledgement from the UE if the DCI is used to re-initialize and/or to release the D2D resource.

9. The method of claim 7 or 8, further comprising:

the network re-transmits the DCI if the acknowledgement from the UE is not successfully received.

10. The method of anyone of claims 7 to 9, further comprising:

if the DCI becomes invalid for transmission before receiving the acknowledgement, the network does not re-transmit the DCI in case of missing acknowledgement.

11. The method of anyone of claims 7 to 10, wherein the DCI is transmitted on a Physical Downlink Control Channel, in the following also referred to as PDCCH, or an Enhanced Physical Downlink Control Channel, in the following also referred to as ePDCCH; and/or wherein the D2D resource is semi-persistently or dynamically scheduled; and/or wherein the D2D RNTI is used to identify the UE or a D2D link in the UE.

12. The method of anyone of claims 7 to 11, wherein the acknowledgement is a positive acknowledgement.

13. The method of anyone of claims 7 to 12, wherein the DCI becomes invalid for transmission if a timer associated with the D2D resource expires.

14. A communication device (300) for reception of a downlink control information, in the following also referred to as DCI, for device-to-device, in the following also referred to as D2D, resource scheduling, the communication device (300) comprising:

a control circuit (306);
a processor (308) installed in the control circuit (306); and
a memory (310) installed in the control circuit (306) and operatively coupled to the processor (308);

wherein the processor (308) is configured to execute a program code (312) stored in the memory (310) to enable the communication device (300) to perform the method steps as defined in anyone of claims 1 to 6.

15. A communication device (300) for transmission of a downlink control information, in the following also referred to as DCI, for device-to-device, in the following also referred to as D2D, resource scheduling, the communication device (300) comprising:

a control circuit (306);
a processor (308) installed in the control circuit (306); and
a memory (310) installed in the control circuit (306) and operatively coupled to the processor (308);

wherein the processor (308) is configured to execute a program code (312) stored in the memory (310) to enable the communication device (300) to perform the method steps as defined in anyone of claims 7 to 13.

**FIG. 1**

FIG. 2

300

INPUT
DEVICE
*302*

OUTPUT
DEVICE
*304*

CONTROL CIRCUIT *306*

CPU *308*

MEMORY *310*

PROGRAM CODE *312*

TRANSCEIVER *314*

## FIG. 3

PROGRAM CODE *312*

APPLICATION LAYER *400*

LAYER 3 *402*

LAYER 2 *404*

LAYER 1 *406*

FIG. 4

Periodic resources reserved for scheduling assignments

SA by UE-A

SA by UE-B

Data pattern used by UE-A

Data pattern used by UE-B

# FIG. 5 (PRIOR ART)

START

600

605

A UE transmits a D2D BSR to a network to request D2D resources

610

The UE receives from the network a DCI addressed to a D2D RNTI for D2D resource scheduling, wherein the D2D RNTI is allocated to the UE by the network

615

The UE transmits an acknowledgement to the network in response to reception of the DCI if the DCI is used to initialize a D2D resource

END

FIG. 6

```
                        ┌─────────────────┐
                        │      START      │        700
                        └────────┬────────┘          /
  705                            │
   ┌───────────────────────────────────────────────────────────────────────┐
   │  A network transmits to a UE a DCI addressed to a D2D RNTI for D2D     │
   │  resource scheduling, wherein the D2D RNTI is allocated to the UE by   │
   │                          the network                                   │
   └───────────────────────────────────────┬───────────────────────────────┘
  710                                       │
   ┌───────────────────────────────────────────────────────────────────────┐
   │  The network receives an acknowledgement from the UE if the DCI is     │
   │             used to initialize a D2D resource                          │
   └───────────────────────────────────────┬───────────────────────────────┘
                                           │
                        ┌─────────────────┐
                        │      END        │
                        └─────────────────┘
```

## FIG. 7

Europäisches
Patentamt

European
Patent Office

Office européen
des brevets

# EUROPEAN SEARCH REPORT

Application Number

EP 15 16 6967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LG ELECTRONICS: "D2D communication based on centralized scheduling", 3GPP DRAFT; R1-140334 CENTRALIZED SCHEDULING_LG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735881, Retrieved from the Internet: URL:http://www.3gpp.org/ftp/Meetings_3GPP_SYNC/RAN/RAN1/Docs/ [retrieved on 2014-02-09] | 1,7,14, 15 | INV. H04W76/02 ADD. H04W72/12 H04W76/06 |
| Y | * Section 2 * * figure 1 * ----- | 2-6,8-13 | |
| Y | US 2014/023008 A1 (AHN JAE-YOUNG [KR] ET AL) 23 January 2014 (2014-01-23) * abstract * * paragraph [0014] - paragraph [0031] * * paragraph [0058] - paragraph [0089] * * figures 3, 4 * ----- | 2-6,8-13 | |
| X,P | WO 2014/098689 A1 (ERICSSON TELEFON AB L M [SE]) 26 June 2014 (2014-06-26) * page 2, line 27 - page 3, line 17 * * page 6, line 29 - page 8, line 11 * * page 10, line 30 - page 11, line 11 * * page 23, line 30 - page 24, line 26 * * figure 2 * ----- -/-- | 1,7,14, 15 | |

**TECHNICAL FIELDS SEARCHED (IPC)**

H04W

The present search report has been drawn up for all claims

| Place of search | Date of completion of the search | Examiner |
|---|---|---|
| Munich | 1 July 2015 | Gitzenis, Savvas |

EPO FORM 1503 03.82 (P04C01)

# EP 2 943 035 A1

Europäisches Patentamt
European Patent Office
Office européen des brevets

## EUROPEAN SEARCH REPORT

Application Number

EP 15 16 6967

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERICSSON: "Resource allocation for D2D transmitters in coverage", 3GPP DRAFT; R2-140625 - RESOURCE ALLOCATION FOR D2D TRANSMITTERS IN COVERAGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Prague, Czech Republic; 20140210 - 20140214 9 February 2014 (2014-02-09), XP050791937, Retrieved from the Internet: URL:http://www.3gpp.org/ftp/Meetings_3GPP_SYNC/RAN2/Docs/ [retrieved on 2014-02-09] * Sections 2 - 2.1.2 * ----- | 1-15 | |

TECHNICAL FIELDS
SEARCHED          (IPC)

The present search report has been drawn up for all claims

| Place of search | Date of completion of the search | Examiner |
|---|---|---|
| Munich | 1 July 2015 | Gitzenis, Savvas |

EPO FORM 1503 03.82 (P04C01)

**ANNEX TO THE EUROPEAN SEARCH REPORT
ON EUROPEAN PATENT APPLICATION NO.**                EP 15 16 6967

This annex lists the patent family members relating to the patent documents cited in  the above-mentioned European search report.
The members are as contained in the European Patent Office EDP file on
The European Patent Office is in no way liable for these particulars which are merely given for the purpose of information.

01-07-2015

| Patent document cited in search report | Publication date | Patent family member(s) | Publication date |
|---|---|---|---|
| US 2014023008    A1 | 23-01-2014 | KR  20120074254 A<br>US     2014023008 A1<br>WO    2012091420 A2 | 05-07-2012<br>23-01-2014<br>05-07-2012 |
| WO 2014098689    A1 | 26-06-2014 | TW      201431409 A<br>WO     2014098689 A1 | 01-08-2014<br>26-06-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61991031 A
- US 61984987 A

**Non-patent literature cited in the description**

- WID on Proposal for a study on Proximity-based Services. *SP-110638*
- E-UTRA; Multiplexing and channel coding (Release 11). *TS 36.212 v11.2.0*
- E-UTRAN; Overall description; Stage 2 (Release 11); RAN1 76 Chairman's note; RAN1 76-bis Chairman's note; 3GPP RAN2 85 Chairman's note. *TS 36.300 v11.5.0*
- Resource allocation for D2D transmitters in coverage. *R2-140625*
- **ERICSSON.** Overview of D2D Scheduling. *R2-140626*
- **ERICSSON.** *3GPP TSG-RAN WG2 #85*
- E-UTRA; Medium Access Control (MAC) protocol specification (Release 11). *TS 36.321 v11.2.0*